(19) Europäisches Patentamt
European Patent Office
Office européen des brevets

(11) EP 1 517 498 A2

(12) EUROPÄISCHE PATENTANMELDUNG

(43) Veröffentlichungstag:
**23.03.2005 Patentblatt 2005/12**

(51) Int Cl.[7]: **H04L 25/03**

(21) Anmeldenummer: **04020826.6**

(22) Anmeldetag: **02.09.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **16.09.2003 DE 10343018**

(71) Anmelder: **Deutsches Zentrum für Luft- und Raumfahrt e.V.**
**53175 Bonn (DE)**

(72) Erfinder:
- **Cosovic, Ivan, Dipl.-Ing.**
  **80339 München (DE)**
- **Schnell, Michael, Dr.**
  **82205 Gilching (DE)**

(74) Vertreter: **von Kirschbaum, Albrecht, Dipl.-Ing.**
**Patentanwalt,**
**Postfach 15 20**
**82102 Germering (DE)**

# (54) Verfahren zur drahtlosen Signalübertragung mit Entzerrungsmassnahmen

(57) Bei der drahtlosen Übertragung digitaler Signale werden Entzerrungsmaßnahmen, welche den aktuellen Einfluss des Übertragungskanals berücksichtigen, durch die Kombination beliebiger sendeseitig durchgeführter Vorverzerrungsmaßnahmen mit beliebigen empfangsseitig durchgeführten Entzerrungsmaßnahmen vorgenommen.

Anwendungsmöglichkeiten liegen vor allem bei Mobilfunk-Mehrträgerübertragungssystemen, insbesondere bei Uplink Time Division Duplex MC-CDMA (Uplink TDD/MC-CDMA).

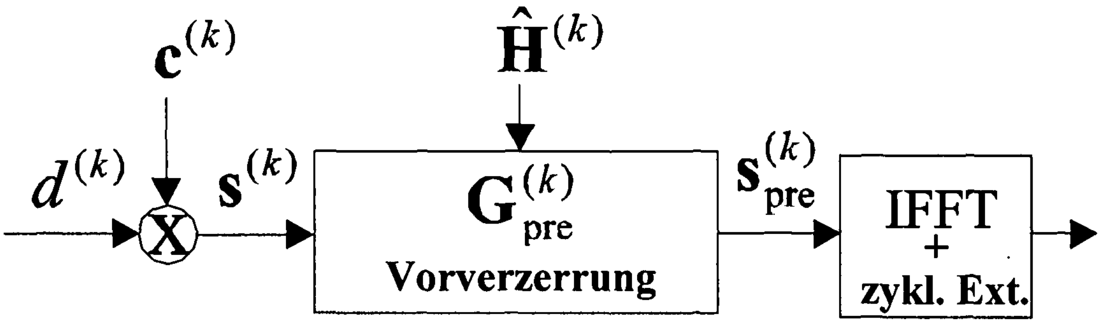


Fig.1

EP 1 517 498 A2

## Beschreibung

Die Erfindung betrifft ein Verfahren zur drahtlosen Übertragung digitaler Signale unter Anwendung von Entzerrungsmaßnahmen, welche den aktuellen Einfluss des Übertragungskanals berücksichtigen.

Wird ein Sendesignal über einen Übertragungskanal übertragen, so beeinflusst der Übertragungskanal das ausgesendete Signal und das in einem Empfänger empfangene Signal weist Störungen und Abweichungen auf. Neben additivem, weißen Rauschen (AWGN; "Additive White Gaussian Noise") können dabei auch Amplituden- und Phasenverzerrungen auftreten, wie beispielsweise bei der Übertragung über einen Mobilfunkkanal. Diese Verzerrungen verschlechtern die Leistungsfähigkeit des vorliegenden Übertragungssystems.

Bei der Mehrträgerübertragung z.B. erfährt jeder Einzelträger des Mehrträgersendesignals durch den Übertragungskanal Amplituden- und Phasenverzerrungen, die sich in der Regel durch einen multiplikativen, komplexwertigen Faktor beschreiben lassen. Besitzt das Mehrträgerübertragungssystem Codevielfachzugriff (CDMA; "Code-Division Multiple-Access") oder Codemultiplex (CDM; "Code-Division Multiplexing"), so können zusätzlich Vielfachzugriffsinterferenzen (MAI; "Multiple-Access Interference") und Intersymbolinterferenzen (ISI; "Inter-Symbol Interference") auftreten. Beeinflusst der Übertragungskanal die Einzelträger des Mehrträgerübertragungssystems unterschiedlich, wie es beispielsweise im Mobilfunkkanal der Regelfall ist, treten MAI bzw. ISI selbst dann auf, wenn zur Realisierung von CDMA bzw. CDM orthogonale Codes verwendet werden. In diesem Fall wird die Orthogonalität der verwendeten Codes durch den Übertragungskanal zerstört. In einem Mehrträgerübertragungssystem mit CDMA oder CDM wird im Sender die Energie eines Informationssymbols auf mehrere Einzelträger verteilt. Im Empfänger werden die Signalanteile der entsprechenden Einzelträger vor der Detektion in geeigneter Weise wieder kombiniert.

Bei drahtlosen digitalen Signalübertragungssystemen und vor allem auch bei Mehrträgerübertragungssystemen mit CDMA oder CDM ist somit der Einfluss der durch den Übertragungskanal hervorgerufenen Amplituden- und Phasenverzerrungen sowie gegebenenfalls der MAI bzw. ISI möglichst gering zu halten, um das Leistungsvermögen zu verbessern.

Es sind bereits verschiedene Verfahren bekannt, um den Einfluss der Amplituden- und Phasenverzerrungen durch den Übertragungskanal bei drahtlosen digitalen Signalübertragungssystemen sowie zusätzlich der MAI bzw. ISI bei Mehrträgerübertragungssystemen auf die Leistungsfähigkeit zu verringern.

Zum einen ist die empfängerseitige Entzerrung bekannt, die in der Literatur häufig als "Post-Equalization" oder nur kurz als "Equalization" bezeichnet wird (S. Kaiser: "Multi-Carrier CDMA Mobile Radio Systems - Analysis and Optimization of Detection, Decoding and Channel Estimation", Fortschrittberichte VDI, Düsseldorf: VDI Verlag, Reihe 10, Nr.531, 1998. Bei Mehrträgerübertragungssystemen wird zur Entzerrung jeder Einzelträger im Empfänger mit einem komplexwertigen Faktor multipliziert. Die Wahl dieses Faktors hängt dabei vom jeweilig verwendeten Entzerrungsalgorithmus und dem aktuellen Einfluss des Übertragungsverhaltens ab.

Zum anderen ist die senderseitig ausgeführte Vorverzerrung bekannt (M. Schnell: "Systeminhärente Störungen bei "Spread-Spectrum" - Vielfachzugriffsverfahren für die Mobilfunkübertragung", Fortschrittberichte VDI, Düsseldorf: VDI Verlag, Reihe 10, Nr. 505, 1997), die in der Literatur oft als "Pre-Equalization" bezeichnet wird. Bei Mehrträgerübertragungssystemen wird zur Vorverzerrung jeder Einzelträger im Sender mit einem komplexwertigen Faktor multipliziert. Die Wahl dieses Faktors hängt vom jeweilig verwendeten Vorverzerrungsalgorithmus und dem aktuellen Einfluss des Übertragungskanals ab.

Vorverzerrung und Entzerrung für die Mehrträgerübertragung beruhen gewöhnlich auf den folgenden bekannten Konzepten:

- "Maximum Ratio Combining" (MRC);
- "Equal Gain Combining" (EGC);
- "Zero Forcing"(ZF)-Kriterium;
- "Minimum Mean Square Error"(MMSE)-Kriterium;
- "Maximum Likelihood"(ML)-Kriterium;
- "Interference Cancellation".

Da man sich also bisher darauf beschränkt, in drahtlosen digitalen Übertragungssystemen entweder ein Vorverzerrung im Sender oder alternativ eine Entzerrung im Empfänger durchzuführen, bedeutet dies, dass allein die Vorverzerrung bzw. die Entzerrung sowohl Amplituden- und Phasenverzerrungen als auch MAI bzw. ISI bei Mehrträgerübertragungssystemen minimieren muss. Dies kann jedoch zu widersprüchlichen Entwurfszielen führen, wie anhand des nachfolgenden Beispiels erläutert wird.

Es wird im Beispiel das "Multi-Carrier Code-Division Multiple-Access"(MC CDMA)-Verfahren betrachtet, also ein Mehrträgerübertragungsverfahren, das Codevielfachzugriff mit orthogonalen Codes (Hadamard-Codes) verwendet. Wird MC-CDMA als Übertragungsverfahren im Mobilfunk eingesetzt, so bewirkt der Übertragungskanal sowohl Amplituden- und Phasenverzerrungen als auch MAI, da die Orthogonalität der Codes durch den Übertragungskanal

zerstört wird. Um die Leistungsfähigkeit des Übertragungsverfahrens zu verbessern, kann eine Vorverzerrung im Sender angewandt werden. Einerseits soll die Vorverzerrung die Orthogonalität der Codes zumindest teilweise wieder herstellen, um die MAI möglichst niedrig zu halten. Dies kann dadurch erfolgen, dass den Einzelträgern, die durch die Verhältnisse im Kanal stark gedämpft werden, entsprechend mehr Leistung zugewiesen wird, damit nach dem Übertragungskanal alle Träger in etwa die gleiche Energie besitzen und die Codes somit annähernd wieder orthogonal werden. Andererseits ist es bekannt, dass es aus der Sicht einer geschickten Energieaufteilung im Sender vorteilhaft ist, Einzelträgern, die im Übertragungskanal nur schwach gedämpft werden, entsprechend viel Energie zuzuweisen ("Water Filling Principle"). Diese beiden Vorverzerrungsstrategien widersprechen sich und können mit Sicherheit nicht allein durch Vorverzerrungsmaßnahmen berücksichtigt werden.

In dem Aufsatz von Wang, Z; Giannakis, G.B.: "Wireless Multicarrier Communications - Where Fourier Meets Shannon", IEEE Signal Processing Magazine, May 2000, Seiten 29-48, wird zwar im Zusammenhang mit einem drahtlosen Mehrträgerübertragungssystem vorgeschlagen, die Vorverzerrungs- bzw. Entzerrungstechnik "Zero Forcing Equalization" nicht ausschließlich im Sender oder Empfänger durchzuführen, sondern als "Balanced Equalization" jeweils teilweise im Sender und teilweise im Empfänger. Es handelt sich jedoch um ein und dieselbe Funktion, die bei dieser besonderen Ausführung eben auf Sender und Empfänger aufgeteilt ist.

Der Erfindung liegt die Aufgabe zu Grunde, drahtlose digitale Signalübertragungsverfahren hinsichtlich ihrer Leistungsfähigkeit so zu verbessern, dass der Einfluss von im Übertragungskanal hervorgerufenen Amplituden- und Phasenverzerrungen sowie gegebenenfalls von MAI bzw. ISI weiter verringert wird und widersprüchliche Ergebnisse, wie sie bei alleiniger Anwendung von senderseitiger Vorverzerrung oder empfängerseitiger Entzerrung entstehen können, vermieden werden.

Gemäß der Erfindung, die sich auf ein Verfahren der eingangs genannten Art bezieht, wird diese Aufgabe in vorteilhafter Weise durch die Kombination beliebiger sendeseitig durchgeführter Vorverzerrungsmaßnahmen mit beliebigen empfangsseitig durchgeführten Entzerrungsmaßnahmen gelöst. Als anwendbare Vorverzerrungs- und Entzerrungskonzepte kommen bei Mehrträgerübertragungsverfahren unter anderem beispielsweise MRC-MMSE oder MMSE-MRC oder MRC-ML in Betracht.

Durch das erfindungsgemäß arbeitende Verfahren wird ein weiterer Freiheitsgrad eingeführt. Durch die Kombination von Vorverzerrung im Sender und Entzerrung im Empfänger kann bei Mehrträgerübertragungsverfahren sowohl die optimale Energieaufteilung im Sender als auch eine Reduzierung von MAI erreicht werden. Das erzielbare Leistungsvermögen mit kombinierter Vorverzerrung und Entzerrung ist besser als mit Vorverzerrung oder Entzerrung jeweils allein.

Das Verfahren nach der Erfindung unterscheidet sich auch gegenüber dem aus dem Aufsatz von Wang, Z; Giannakis, G.B.: "Wireless Multicarrier Communications - Where Fourier Meets Shannon", IEEE Signal Processing Magazine, May 2000, Seiten 29-48, bekannten Mehrträgerübertragungssystem mit "Balanced Equalization" grundlegend, da bei dem bekannten System eine Kombination verschiedener Vorverzerrungs- und Entzerrungstechniken oder die Kombination von optimaler Energieaufteilung im Sender mit Entzerrungstechniken im Empfänger, wie sie durch die Erfindung vorgeschlagen werden, in keiner Weise betrachtet oder angedeutet werden.

Vorteilhafte Weiterbildungen und Verwendungsmöglichkeiten des Verfahrens nach der Erfindung sind in den unmittelbar oder mittelbar auf den Patentanspruch 1 rückbezogenen Unteransprüchen angegeben.

Im später noch im einzelnen beschriebenen Ausführungsbeispiel wird die Erfindung zwar für ein "Uplink Time Division Duplex MC-CDMA" erläutert. Die Erfindung ist jedoch nicht auf dieses Ausführungsbeispiel beschränkt, sondern lässt sich auf folgende Fälle verallgemeinern.

Die Erfindung ist nicht nur für die "Uplink"("Reverse-Link")-Übertragung zwischen mobilen, portablen oder festen Sendestationen und der Basisstation relevant, sondern auch für die "Downlink"("Forward-Link")-Übertragung zwischen der Basisstation und den mobilen, portablen oder festen Empfangsstationen.

Die Erfindung ist nicht nur für Zeitduplexverfahren ("Time Division Duplex") geeignet, sondern auch für Frequenz- und Codeduplexverfahren.

Das Verfahren nach der Erfindung ist nicht nur für MC-CDMA relevant, sondern auch für alle Mehrträgerübertragungsverfahren, bei denen eine Vorverzerrung im Sender und eine Entzerrung im Empfänger anhand einer Manipulation der Einzelträger erfolgen kann.

Die Erfindung ist nicht nur bei Mehrträgerübertragungsverfahren nutzbar, sondern auch bei Einträgerübertragungsverfahren, wenn Vorverzerrung und Entzerrung im Frequenzbereich durchgeführt werden.

Die Erfindung ist nicht nur für die Kombination von Vorverzerrungs- und Entzerrungsmaßnahmen relevant, sondern auch für die Kombination von Energieaufteilungskonzepten im Sender mit Entzerrungskonzepten im Empfänger.

Im Falle eines Vielfachzugriff-Systems ist das Verfahren nicht nur für Entzerrungskonzepte von Bedeutung, die lediglich das Empfangssignal des betrachteten Nutzers berücksichtigen (sogenannte "Single User Detection"-Verfahren; SUD), sondern auch für Entzerrungskonzepte, welche die Signale mehrerer oder aller Nutzer bei der Detektion einbeziehen (sogenannte "Multi User Detection"-Verfahren; MUD). Beispiele für solche Entzerrungskonzepte sind das

ML(Maximum Likelihood)-Kriterium oder "Interference Cancellation".

Im Falle eines Multiplex-Systems ist das Verfahren nach der Erfindung nicht nur für Entzerrungskonzepte gültig, die ein einzelnes Informationssymbol betrachten, sondern auch für Entzerrungskonzepte, die mehrere oder alle im Multiplex übertragenen Informationssymbole bei der Detektion einbeziehen. Beispiele für solche Entzerrungskonzepte sind das ML-Kriterium oder "Interference Cancellation".

Das Verfahren nach der Erfindung kann darüber hinaus in vorteilhafter Weise mit beliebigen Standardverfahren der Nachrichtenübertragungstechnik verknüpft werden, wie beispielsweise mit verschiedenen Modulationsverfahren, mit verschiedenen Codierungsverfahren, mit "Space-Time Coding", mit "Multiple-Input Multiple Output"(MIMO) -Konzepten, etc. Insbesondere sind durch Verknüpfung mit Codierungsverfahren weitere beachtliche Steigerungen der Leistungsfähigkeit des erfindungsgemäßen Verfahrens erreichbar.

Das Verfahren nach der Erfindung kann prinzipiell Verwendung in der Luftschnittstelle existierender digitaler Signalübertragungsverfahren finden, um diese zu verbessern. Allerdings ist es dazu erforderlich, die Luftschnittstelle sowohl des Senders als auch des Empfängers anzupassen. Bei bereits standardisierten Übertragungsverfahren ist dazu in aller Regel der existierende Standard zu ändern.

Im Bereich "Wireless Local Area Network" (WLAN) sind die Standards zur Zeit noch sehr im Fluss. Es werden laufend neue Standards für WLAN-Systeme mit noch höherer Leistungsfähigkeit geschaffen. Das Verfahren nach der Erfindung könnte in einen der nächsten WLAN-Standards eingebracht werden.

Die Entwicklung neuer Luftschnittstellen für die nächste Mobilfunk-Generation ("Vierte Generation Mobilfunk"; 4G) hat gerade erst begonnen. Dabei spielen Mehrträgerübertragungsverfahren eine ganz entscheidende Rolle und es ist davon auszugehen, dass diese in einem zukünftigen 4G-Standard Eingang finden. Das Verfahren nach der Erfindung kann in vorteilhafter Weise in den Entwicklungs- und anschließenden Standardisierungsprozess für zukünftige Mobilfunksysteme eingebracht werden. Der Zeitrahmen für die Einführung der ersten 4G-Mobilfunksysteme wird auf etwa 10 Jahre geschätzt.

Auch in der Luftfahrtkommunikation hat die Diskussion über neue aeronautische Kommunikationsverfahren begonnen, welche die ersten digitalen Luftfahrt-Kommunikationsstandards (VDL Mode 2, 3 und 4) langfristig ablösen sollen. Mehrträgerübertragungsverfahren sind auch in der Luftfahrtkommunikation von großem Interesse, da die Ausbreitungsbedingungen in der Luftfahrtkommunikation, insbesondere im Flughafenbereich, mit den Ausbreitungsbedingungen im Mobilfunk vergleichbar sind.

Das Verfahren nach der Erfindung kann in vorteilhafter Weise in den Entwicklungs- und anschließenden Standardisierungsprozess für zukünftige aeronautische Kommunikationsverfahren eingebracht werden. Der Zeitrahmen für die Einführung neuer aeronautischer Kommunikationsverfahren wird erfahrungsgemäß länger als 10 Jahre dauern. Allerdings wird zur Zeit davon ausgegangen, dass im Zeitraum von 2015 bis 2020 die Kapazitätsgrenze der existierenden aeronautischen Kommunikationssysteme in Europa erreicht ist. Dies bedeutet, dass bis dahin neue aeronautische Kommunikationssysteme zuverlässig einsetzbar vorliegen müssen.

Zur Erläuterung des Verfahrens nach der Erfindung wird nachfolgend anhand von beigefügten Zeichnungen ein vorteilhaftes Ausführungsbeispiel für ein Uplink Time Division Duplex Multi-Carrier Code-Division Multiple-Access (TDD/MC-CDMA)-System im Mobilfunkbereich beschrieben. Es zeigen:

Fig.1 das Blockschaltbild eines TDD/MC-CDMA-Uplink-Senders eines mobilen Nutzers k,

Fig.2 das verallgemeinerte Blockschaltbild eines TDD/MC-CDMA-Uplink-Empfängers,

Fig.3 in einem Abhängigkeitsdiagramm (Bitfehlerrate in Abhängigkeit vom Signal/Rausch-Abstand $Eb/N_0$ in dB) die Leistungsfähigkeit verschiedener grundsätzlicher TDD/MC-CDMA-Vorverzerrungstechniken mit einer Spreizcodelänge $L$=16 und $K$=16 aktiven Nutzern,

Fig.4 in einem Abhängigkeitsdiagramm (Bitfehlerrate in Abhängigkeit vom Signal/Rausch-Abstand $Eb/N_0$ in dB) Leistungsfähigkeitsgewinne, die mit dem kombinierten Vorverzerrungs-/Entzerrungsverfahren nach der Erfindung für eine Vollbelastung von $K$=8 aktiven Nutzern und eine Spreizcodelänge $L$=8 erreicht werden, und

Fig.5 in einem Abhängigkeitsdiagramm (Bitfehlerrate in Abhängigkeit vom Signal/Rausch-Abstand $Eb/N_0$ in dB) die Single-User-Grenzen von Entzerrung, Vorverzerrung jeweils allein und kombinierter Vorverzerrung/Entzerrung gemäß dem Verfahren nach der Erfindung.

Uplink-Zeitduplex-Mehrträger-CDMA(Uplink Time Division Duplex Multi-Carrier Code-Division Multiple-Access; TDD/MC-CDMA)-Nachrichtenübertragungssysteme haben eine wachsende Bedeutung bei der Mobilfunk-Kommunikation erreicht.

TDD/MC-CDMA arbeitet unter der Voraussetzung, dass eine starke Korrelation zwischen den Uplink- und

Downlink-Übertragungskanalbedingungen besteht. Der Hauptvorteil von TDD/MC-CDMA ist, dass die Auswirkungen des Kanals auf das Uplink-Signal in der Mobilstation auf der Grundlage der Kanalschätzung aus dem Downlink-Signal vorverzerrt werden können.

Nachfolgend werden Uplink-TDD/MC-CDMA-Übertragungssysteme, die entsprechend dem Verfahren nach der Erfindung eine Kanalvorverzerrung am Sender mit einer Kanalentzerrung am Empfänger kombinieren, im Zusammenhang mit Mobilfunkübertragungen erläutert, untersucht und analysiert. Die Untersuchungen berücksichtigen dabei verschiedene Kanalvorverzerrungstechniken mit Sendeleistungsbeschränkung, wie z.B. "Maximum Ratio Combining" (MRC), "Equal Gain Combining" (EGC), "Zero Forcing" (ZF), "Controlled Equalization" (CE), "Quasi Minimum Mean Square Error Equalization" (Quasi-MMSE) und die optimale Vorverzerrung, die auf der Maximierung des modifizierten Signal/"Stör- plus Rausch"-Abstandes beruht (Optimal Pre-Equalization based on the Maximization of Modified Signalover-Interference-plus-Noise Ratio; OMSP).

Im Folgenden wird zunächst das TDD/MC-CDMA-Übertragungssystem beschrieben. Danach werden die betrachtete bekannte Vorverzerrungs-, Entzerrungs- und schließlich die neue, kombinierte Vorverzerrungs-/Entzerrungstechnik gemäß dem Verfahren nach der Erfindung dargelegt. Die mit diesen verschiedenen Verund Entzerrungstechniken erreichte Leistungsfähigkeit wird danach dargestellt. Abschließend werden dann noch die Ergebnisse zusammengefasst.

Untersucht wird ein synchrones Uplink-Übertragungssystem mit $K$ aktiven Nutzern. Fig.1 stellt die Blockstruktur des betrachteten MC-CDMA-Uplink-Senders des mobilen Nutzers $k$, $k$ = 1,..., $K$ dar.

Die aus dem Symbolmapper erhaltenen, komplexwertigen Datensymbole $d^{(k)}$ werden durch einen nutzerspezifischen orthogonalen Code, z.B. den Walsh-Hadamard-Code, gespreizt. Die Länge des Spreizcodes $\mathbf{c}^{(k)} = (c_1^{(k)}, c_2^{(k)},...,c_L^{(k)})^T$ ist $L$, während die Dauer des Spreizchips $T_c$ beträgt. Die Datensymbole $d^{(k)}$ haben die Dauer $T = LT_c$. Der Spreizungsprozess ergibt den Übertragungsvektor, der durch

$$s^{(k)} = c^{(k)} d^{(k)} = (s_1^{(k)},...,s_L^{(k)})^T, \tag{1}$$

angegeben wird, wobei $(.)^T$ die Transponierung bezeichnet. Der resultierende Vektor $\mathbf{s}^{(k)}$ wird mit einer $L \times L$ Diagonal-Vorverzerrungsmatrix $\mathbf{G}_{pre}^{(k)}$ vorverzerrt und lautet dann:

$$s_{pre}^{(k)} = G_{pre}^{(k)} s^{(k)} = (s_{pre,1}^{(k)},...,s_{pre,L}^{(k)})^T. \tag{2}$$

Die Diagonalelemente $G_{pre,l,l}^{(k)}$ der Vorverzerrungsmatrix $\mathbf{G}_{pre}^{(k)}$ werden aus der Kanalzustandsinformation berechnet, die aus der Downlink-Kanalschätzung abgeleitet wird. Eine pilotsymbolgestützte Downlink-Kanalschätzung liefert die Kanalzustandsinformation, die als $L \times L$-Diagonalmatrix $\hat{\mathbf{H}}^{(k)}$ mit Diagonalelementen $\hat{H}_{l,l}^{(k)}$ dargestellt wird. Die Elemente $\hat{H}_{l,l}^{(k)}$ stellen den geschätzten Schwund auf den L Unterträgern dar und werden aus den Pilotsymbolen des vorhergehenden MC-CDMA-Rahmens erfasst. Ein MC-CDMA-Rahmen ist ein Block von aufeinanderfolgenden MC-CDMA-Symbolen. Im Folgenden wird eine ideale Downlink-Kanalschätzung angenommen.

Die Folge $\mathbf{s}_{pre}^{(k)}$ wird auf die L Unterträger über die Inverse Fast Fourier Transformation (IFFT) aufmoduliert und schließlich wird ein Guard-Intervall in Form einer zyklischen Fortsetzung (Extension) hinzugefügt.

Während der Ausbreitung über den frequenzselektiven zeitvarianten Mehrwege-Kanal wird das Übertragungssignal durch den Mehrwege-Kanal selbst und zwar durch das sogenannte AWGN-Rauschen (Additive White Gaussian Noise) und durch die störenden Einwirkungen von anderen Nutzern beeinflusst.

Am Empfänger lautet dann das empfangene Signal nach Entfernung des Guard-Intervalls und nach einer Fast Fourier Transformation (FFT)

$$\mathbf{r} = \sum_{k=1}^{K} \mathbf{r}^{(k)} + \mathbf{n} = \sum_{k=1}^{K} \mathbf{H}^{(k)} \mathbf{G}_{\text{pre}}^{(k)} \mathbf{s}^{(k)} + \mathbf{n} = (r_1, \dots, r_L)^{\mathrm{T}}, \qquad (3)$$

wobei die $L \times L$ -Diagonalmatrix $\mathbf{H}^{(k)}$ die Kanalmatrix mit den Diagonalelementen $H_{l,l}^{(k)}$ darstellt. Darüber hinaus stellt der Vektor $\mathbf{n}^{(k)} = (n_1^{(k)},\dots,n_L^{(k)})^{\mathrm{T}}$ den Einfluss des AWGN-Rauschens mit der Störvarianz $\sigma^2$ dar. Das empfangene Signal wird dann entzerrt und schließlich decodiert.

Die Entzerrung kann in verschiedener Weise erfolgen. Um die möglichen Gewinne der zusätzlichen Entzerrung gegenüber der Vorverzerrung allein einzuschätzen, wird vorausgesetzt, dass der Schwundkanal am Empfänger durch die Kanalschätzung perfekt geschätzt worden ist. Fig.2 stellt ein Blockschaltbild eines verallgemeinerten TDD/MC-CDMA-Uplink-Empfängers dar, der verschiedene Single-User-Detection(SUD)- und Multi-User-Detection(MUD)-Entzerrungsmaßnahmen und -konzepte umfasst, die im Folgenden noch beschrieben werden.

Das Hauptgewicht der hier vorgenommenen Untersuchungen liegt auf Vorverzerrungstechniken mit Sendeleistungsbeschränkung, bei welcher die Gesamtübertragungsleistung genauso groß ist wie die Übertragungsleistung ohne Vorverzerrung. Es wird hier angemerkt, dass durch Anwendung der Vorverzerrung mit Sendeleistungsbeschränkung die zur Verfügung stehende Übertragungsleistung auf die benutzten Unterträger neu aufgeteilt wird und keine zusätzliche Leistung in die Übertragung eingegeben wird. Lösungen, die keine Leistungseinschränkung aufweisen, führen zur unkontrollierten Ausstrahlung von Leistung am Sender und können deshalb in der Praxis nicht realisiert werden. Die Vorverzerrung mit Sendeleistungsbeschränkung ist aus dem bereits erwähnten Aufsatz von M. Schnell: "Systeminhärente Störungen bei "Spread-Spectrum" - Vielfachzugriffsverfahren für die Mobilfunkübertragung", Fortschrittberichte VDI, Düsseldorf: VDI Verlag, Reihe 10, Nr. 505, 1997 bekannt.

Die Bedingung für die Vorverzerrung mit Sendeleistungsbeschränkung ist gegeben durch:

$$\sum_{l=1}^{L} \left| G_{\text{pre},l,l}^{(k)} s_l^{(k)} \right|^2 = \sum_{l=1}^{L} \left| s_l^{(k)} \right|^2 . \qquad (4)$$

Unter der Voraussetzung, dass alle Symbole $s_l^{(k)}$ die gleiche Übertragungsleistung haben, reduziert sich die Gleichung (4) auf

$$\sum_{l=1}^{L} \left| G_{\text{pre},l,l}^{(k)} \right|^2 = \sum_{l=1}^{L} \left| G_{l,l}^{(k)} W^{(k)} \right|^2 = L , \qquad (5)$$

wobei $G_{l,l}^{(k)}$ der Verzerrungskoeffizient ohne Leistungseinschränkung und $W^{(k)}$ der Normierungsfaktor ist, der die ausgesendete Leistung konstant hält. Der Faktor $W^{(k)}$ ist gegeben durch

$$W^{(k)} = \sqrt{\frac{L}{\sum_{l=1}^{L} \left| G_{\text{pre},l,l}^{(k)} \right|^2}} . \qquad (6)$$

Verschiedene Vorverzerrungstechniken führen zu verschiedenen Vorverzerrungskoeffizienten, wie sie im Folgenden angegeben werden.

"Maximum Ratio Combining Pre-Equalization" (Pre-Eq. MRC) wichtet das Übertragungssignal mit Koeffizienten proportional zu konjugiert komplexen Kanalkoeffizienten, was

$$G_{\mathrm{pre},l,l}^{(k)} = H_{l,l}^{(k)^{*}} \sqrt{\frac{L}{\sum_{l=1}^{L} \left|H_{l,l}^{(k)}\right|^{2}}} \quad (7)$$

ergibt, wobei der Index * die komplexe Konjugation bezeichnet.

Der Nachteil der MRC-Vorverzerrung besteht darin, dass sie die Orthogonalität von Spreizcodes weiter beeinträchtigt oder sogar zerstört und deshalb die Mehrfachzugriffsstörungen (MAI; Multiple-Access Interference) steigert.

"Equal Gain Combining" (EGC) korrigiert lediglich die Phasenverschiebung und nicht die Dämpfung des Schwundkanals. Der zugeteilte Vorverzerrungskoeffizient ist:

$$G_{\mathrm{pre},l,l}^{(k)} = \frac{H_{l,l}^{(k)^{*}}}{\left|H_{l,l}^{(k)}\right|} . \quad (8)$$

"Zero Forcing" (ZF) stellt die Orthogonalität zwischen den Nutzern wieder her und beseitigt MAI durch Invertieren der Kanaleigenschaften. Jedoch werden auf Grund der Leistungseinschränkung große Leistungsbeträge dafür eingesetzt, um das Signal auf Unterträgern mit hohem Schwund vorzuverzerren, was im Vergleich zur AWGN-Rauschleistung zu einem niedrigen Pegel der Empfangsleistung auf Unterträgern führt. Deshalb wird das Signal durch das AWGN-Rauschen stark beeinflusst. Der resultierende Vorverzerrungskoeffizient lautet:

$$G_{\mathrm{pre},l,l}^{(k)} = \frac{1}{H_{l,l}^{(k)}} \sqrt{\frac{L}{\sum_{l=1}^{L} \frac{1}{\left|H_{l,l}^{(k)}\right|^{2}}}} . \quad (9)$$

"Controlled Equalization" (CE) kombiniert eine modifizierte Version von EGC- und ZF-Vorverzerrung. Wenn der Betrag des Kanalkoeffizienten

$$\left|H_{l,l}^{(k)}\right|$$

unterhalb eines Schwellenwertes $a_{thresh}$ liegt, wird nur die EGC benutzt, um zu verhindern, dass große Leistungsbeträge auf Unterträgern mit hohem Schwund eingesetzt werden. Sonst wird ZF ausgeführt. Der zugewiesene Vorverzerrungskoeffizient ist:

$$G_{\mathrm{pre},l,l}^{(k)} = \begin{cases} \frac{1}{H_{l,l}^{(k)}} W^{(k)} & : \left|H_{l,l}^{(k)}\right| \geq a_{\mathrm{thresh}} \\ \frac{H_{l,l}^{(k)^{*}}}{\left|H_{l,l}^{(k)}\right| a_{\mathrm{thresh}}} W^{(k)} & : \left|H_{l,l}^{(k)}\right| < a_{\mathrm{thresh}}, \end{cases} , \quad (10)$$

wobei der Normierungsfaktor $\boldsymbol{W}^{(k)}$ gleich

$$W^{(k)} = \begin{cases} \frac{1}{\left|H_{l,l}^{(k)}\right|^2} & : \quad \left|H_{l,l}^{(k)}\right| \geq a_{\text{thresh}} \\ \frac{1}{\left|a_{\text{thresh}}^{(k)}\right|^2} & : \quad \left|H_{l,l}^{(k)}\right| < a_{\text{thresh}}, \end{cases} \quad (11)$$

ist. Der Nachteil von CE ist, dass der optimale Schwellenwert durch im voraus auszuführende Untersuchungen ermittelt werden muss. Das Optimum hängt sowohl vom augenblicklichen Signal/Stör-Abstand (SNR) als auch von der Anzahl *K* der aktiven Nutzer ab.

"Quasi Minimum Mean Square Error Pre-Equalization" (Quasi-MMSE) stellt keine wirkliche Uplink-MMSE-Vorverzerrungstechnik dar Diese Lösung wird wegen ihrer Ähnlichkeit mit Downlink-"MMSE per-Subcarrier Equalization" (MMSE-PS) Quasi-MMSE genannt. Der zugewiesene Vorverzerrungskoeffizient ist:

$$G_{\text{pre},l,l}^{(k)} = \frac{H_{l,l}^{(k)*}}{(K-1)\left|H_{l,l}^{(k)}\right|^2 + \sigma^2 L} \sqrt{\frac{L}{\sum_{l=1}^{L} \frac{\left|H_{l,l}^{(k)}\right|^2}{\left((K-1)\left|H_{l,l}^{(k)}\right|^2 + \sigma^2 L\right)^2}}}. \quad (12)$$

Da MMSE-PS die beste bekannte Single-User-Detection(SUD)-Technik darstellt, ist davon auszugehen, dass die Quasi-MMSE-Vorverzerrung ähnlich gut arbeitet. Es ist auch bereits nachgewiesen worden, dass die Quasi-MMSE-Vorverzerrung eine suboptimale Lösung der OMSP-Vorverzerrung darstellt.

Die Quasi-MMSE-Vorverzerrung erfordert Kenntnis sowohl über die Anzahl *K* der aktiven Nutzer als auch über die Störvarianz $\sigma^2$. Dies führt eine zusätzliche Rechenkomplexität am Sender ein.

"Modified Quasi Minimum Mean Square Error Pre-Equalization" (mod-quasi-MMSE) ist eine suboptimale Lösung von Quasi-MMSE. Mod-quasi-MMSE verringert die Rechenkomplexität von Quasi-MMSE durch Wählen eines festen Wertes $\lambda$, der K und $\sigma^2$ ersetzt. Der Koeffizient $\lambda$ wird für einen bestimmten Wert des Signal/Stör-Abstandes SNR optimiert, welcher der maximal annehmbaren Bitfehlerrate (Bit Error Rate; BER) für das Übertragungssystem entspricht. Dies wird unter der Annahme des ungünstigsten Falles (worst case) ausgeführt, der einem vollbelasteten System entspricht. Die mod-quasi-MMSE-Vorverzerrung liefert den Koeffizienten:

$$G_{\text{pre},l,l}^{(k)} = \frac{H_{l,l}^{(k)*}}{\left|H_{l,l}^{(k)}\right|^2 + \lambda} \sqrt{\frac{L}{\sum_{l=1}^{L} \frac{\left|H_{l,l}^{(k)}\right|^2}{\left(\left|H_{l,l}^{(k)}\right|^2 + \lambda\right)^2}}}. \quad (13)$$

"Pre-Equalization based on Maximization of Signal-over-Interference-to-Noise Ratio" (OMSP), also eine Vorverzerrung, beruhend auf der Maximierung des Signal/"Stör- plus Rausch"-Abstandes, liefert die Vorverzerrungsmatrix:

$$\mathbf{g}_{\text{pre}}^{(k)} = \left(\mathbf{\Phi}^{(k)} + \frac{\sigma^2}{L}\mathbf{I}_L\right)^{-1} \mathbf{h}^{(k)} \sqrt{\frac{L}{\sum_{l=1}^{L} G_{\text{pre},l,1}^{(k)}}}, \quad (14)$$

wobei die LxL-Matrix

$$\mathbf{\Phi}^{(k)} = \sum_{\substack{p=1 \\ p\neq k}}^{K} \mathbf{u}^{(p,k)}\left(\mathbf{u}^{(p,k)}\right)^{\mathrm{H}}$$

ist. Die Elemente des 1x$L$-Vektors $\mathbf{u}^{(p,k)}$ sind als $u_l^{(p,k)} = c_l^{(p)} H_{l,l}^{(k)} c_l^{(k)}$ gegeben, wobei $(.)^{\mathrm{H}}$ die komplexe Konjugation und Transposition bezeichnet. Außerdem werden $L\times1$-Vektoren $\mathbf{g}_{\mathrm{pre}}^{(k)} = (G_{\mathrm{pre,l,l}}^{(k)},....,G_{\mathrm{pre},L,L}^{(k)})^{\mathrm{T}}$ bzw. $\mathbf{h}^{(k)} = (H_{\mathrm{l,l}}^{(k)},...,H_{L,L}^{(k)})^{\mathrm{T}}$ eingeführt, welche die Matrix-Diagonalelemente $\mathbf{G}_{\mathrm{pre}}^{(k)}$ bzw. $\mathbf{H}^{(k)}$ enthalten. Darüber hinaus stellt $\mathbf{I}_L$ die $L\times L$ -Einheitsmatrix dar.

Die OMSP-Vorverzerrung benötigt eine große Rechenkomplexität, welche diese Technik in der Praxis schwer ausführbar macht.

Die empfangsseitige Entzerrung des Kanals kann in verschiedener Weise ausgeführt werden, wie aus der bereits genannten Literaturstelle von S. Kaiser: "Multi-Carrier CDMA Mobile Radio Systems - Analysis and Optimization of Detection, Decoding and Channel Estimation", Fortschrittberichte VDI, Düsseldorf: VDI Verlag, Reihe 10, Nr.531, 1998 hervorgeht. Grundsätzlich besteht eine allgemeine Einteilung in die "Single User Detection"(SUD)- und die "Multi User Detection"(MUD)-Techniken. Der Hauptunterschied zwischen diesen beiden Techniken besteht darin, dass die MUD-Techniken Informationen über andere Nutzer ausnutzen, um MAI zu bekämpfen, während die SUD-Techniken dies nicht tun. Nachfolgend werden lediglich allgemeine Anmerkungen zu den verschiedenen Entzerrungstechniken gemacht.

Die "Single User Detection"(SUD)-Techniken sind grundsätzlich viel einfacher als die "Multi User Detection" (MUD)-Techniken auszuführen. Als Beispiel wird die "Maximum Ratio Combining"-Entzerrungstechnik (post-eq. MRC) betrachtet. Diese Entzerrungstechnik liefert den Entzerrungskoeffizienten:

$$G_{\mathrm{pre},l,l}^{(k)} = H_{l,l}^{(k)*}\,. \tag{15}$$

Die "Multi User Detection"(MUD)-Techniken lassen sich in lineare und nichtlineare Techniken einteilen. Als ein Beispiel der linearen Techniken wird die "MUD Minimum Mean Square Error Equalization" (MMSE-MUD) betrachtet. MMSE-MUD liefert die Entzerrungsmatrix

$$\mathrm{G}_{\mathrm{post}}=(\mathrm{B}^{\mathrm{H}}\mathrm{B}+\sigma^2\mathrm{I}_L)^{-1}\mathrm{B}^H, \tag{16}$$

wobei **B** die $L\times K$-Matrix mit den Koeffizienten

$$b_{l,k} = H_{l,l}^{(k)}\, C_l^{(k)},\ l = 1,...\ L;\ k = 1,\ ...\ K \tag{17}$$

ist.

Am Empfänger wird das empfangene Signal r mit der Entzerrungsmatrix $\mathbf{G}_{\mathrm{post}}$ multipliziert und decodiert.

Was die nichtlinearen Techniken angeht, so wird hier die "Parallel Interference Cancellation" (PIC) betrachtet. Die anfängliche Detektionsstufe lautet

$$\hat{d}^{(k)}[0] = Q\left\{\left(c^{(k)}\right)^{\mathrm{T}}\mathbf{r}\right\}, \tag{18}$$

während die t-te (t>0) Detektorstufe durch

$$\hat{d}^{(k)}[t]=Q\left\{\left(c^{(k)}\right)^{\mathrm{T}}\left(\mathbf{r}-\sum_{p=1,p\neq k}^{K}\mathbf{H}^{(p)}c^{(p)}\hat{d}^{(p)}[t-1]\right)\right\} \tag{19}$$

beschrieben wird, wobei Q{.} die Symboldetektion bezeichnet.

Wie bereits in Fig.2 dargestellt ist, können bei der Entzerrung verschiedene "Single User Detection"(SUD) -Techniken und "Multi User Detection"(MUD)-Techniken gemeinsam kombiniert werden, um eine bessere Leistungsfähigkeit zu erreichen.

Das erfindungsgemäße Verfahren der kombinierten Kanal-Vorverzerrungs-/Entzerrungstechnik besteht darin, sendeseitige Vorverzerrung und empfangsseitige Entzerrung zu kombinieren. Dadurch kann die Leistungsfähigkeit ganz erheblich verbessert werden.

Als Beispiel wird der "Single User Detection"(SUD)-Fall, $k=1$, betrachtet, wobei am Sender die MRC-Vorverzerrung und am Empfänger die "post-eq. MRC"-Entzerrung angewandt wird.

Für die Entzerrung werden neue Entzerrungskoeffizienten entsprechend dem nach der Vorverzerrung verbliebenen Restkanalkoeffizienten berechnet. Im betrachteten Fall ergibt dies:

$$G_{\mathrm{post},l,l}^{(1)}=\left(G_{\mathrm{pre},l,l}^{(1)}H_{l,l}^{(1)}\right)^{*}=\left(H_{l,l}^{(1)*}\sqrt{\frac{L}{\sum_{l=1}^{L}\left|H_{l,l}^{(1)}\right|^{2}}}H_{l,l}^{(1)}\right)^{*}. \tag{20}$$

Es wird das Verhältnis der Signalleistung zur Störleistung am Empfänger nach dem Entspreizen betrachtet. Es lässt sich als

$$\frac{\mathrm{P_{signal}}}{\mathrm{P_{noise}}}=\frac{\left(\sum_{l=1}^{L}\left|\mathbf{H}_{l,l}^{(1)}\right|^{4}\right)^{2}\frac{L^{2}}{\left(\sum_{i=1}^{L}\left|\mathbf{H}_{i,i}^{(1)}\right|^{2}\right)^{2}}\frac{\mathrm{P_{tx}}}{L}}{\sum_{l=1}^{L}\left|\mathbf{H}_{l,l}^{(1)}\right|^{4}\frac{L}{\sum_{i=1}^{L}\left|\mathbf{H}_{i,i}^{(1)}\right|^{2}}\sigma^{2}}=\frac{\mathrm{P_{tx}}}{\sigma^{2}}\frac{\sum_{l=1}^{L}\left|\mathbf{H}_{l,l}^{(1)}\right|^{4}}{\sum_{l=1}^{L}\left|\mathbf{H}_{l,l}^{(1)}\right|^{2}} \tag{21}$$

darstellen, wobei $P_{tx}$ die Sendeleistung, $P_{signal}$ die Nutzsignalleistung am Empfänger nach Entspreizung und $P_{noise}$ die Störleistung am Empfänger nach Entspreizen darstellen.

Aus der Gleichung (21) kann geschlossen werden, dass durch Anwendung der kombinierten Vorverzerrungs-/Entzerrungstechnik entsprechend dem Verfahren nach der Erfindung der Signal-/Stör-Abstand erheblich vergrößert werden kann, und somit wird auch die Einzelnutzer ("Single User")-Grenze für MC-CDMA-Übertragung ganz erheblich verbessert. Die Ergebnisse, welche diese Behauptung stützen, werden nachfolgend noch angegeben.

Wenn sendeseitige Vorverzerrungs- und empfangsseitige Entzerrungstechniken für die kombinierte Kanal-Vorverzerrung/Entzerrung gemeinsam betrieben werden, sind alle Kombinationen möglich, lediglich mit dem Unterschied, dass manche Kombinationen eine bessere Leistungsfähigkeit als andere haben, wie nachfolgend noch aufgezeigt wird.

Es werden nun verschiedene Simulationsergebnisse angegeben, welche die gesteigerte Leistungsfähigkeit darstellen, die durch die Verwendung der kombinierten Vorverzerrung/Entzerrung gemäß dem Verfahren nach der Erfindung im Vergleich zur sendeseitigen Vorverzerrung bzw. der empfangsseitigen Entzerrung jeweils allein erzielt wird. Besondere Betonung liegt auf dem "Single User Detection"(SUD)-Fall, für den gezeigt wird, dass neue, weitaus verbesserte Einnutzer("Single User")-Grenzen erreicht werden können, wenn die kombinierte Vorverzerrungs-/Entzerrungstechnik nach der Erfindung angewandt wird.

Der diesen Simulationen zu Grunde liegende Mobilfunkkanal ist ein unabhängiger Rayleigh-Schwundkanal. Die Spreizcodelänge, die Anzahl der Nutzer und die benutzten Vorverzerrungs- und Entzerrungstechniken sind variabel.

In Fig.3 werden verschiedene Kanalvorverzerrungstechniken mit Sendeleistungsbeschränkung für ein vollbelastetes TDD/MC-CDMA-Übertragungssystem verglichen.

Wie aus Fig.3 ersichtlich ist, übertreffen CE und Quasi-MMSE die anderen Vorverzerrungstechniken.

In Fig.4 sind die Leistungsfähigkeitsgewinne ersichtlich, die mit der kombinierten Vorverzerrungs-/Entzerrungstechnik gemäß dem Verfahren nach der Erfindung im Vergleich zur sendeseitigen Vorverzerrung bzw. der empfangsseitigen Entzerrung jeweils allein erzielt werden. Es ist zu erkennen, dass die kombinierte Vorverzerrung/Entzerrung sowohl die Vorverzerrung allein als auch die Entzerrung allein übertrifft.

Fig.5 zeigt die Vorteile der kombinierten Vorverzerrung/Entzerrung im Einnutzer("Single User")-Fall. Für die Vorverzerrung und die Entzerrung ist die Leistungsfähigkeit im Einzelnutzer-Fall etwa gleich groß und entspricht der "Matched Filter"(MF)-Grenze. Aus Fig.5 ist ersichtlich, dass im Einnutzer-Fall die Grenze für die kombinierte Vorverzerrung/Entzerrung etwa 2-3 dB niedriger ist als für die Vorverzerrung bzw. die Entzerrung jeweils allein. Zum Vergleich werden Ergebnisse für verschiedene Spreizcodelängen angegeben. Es ist auch anzumerken, dass die kombinierte Vorverzerrung/Entzerrung sogar die AWGN-Kurve übertrifft. Diese Ergebnisse bestätigen die vorher bereits im Zusammenhang mit dem Ausführungsbeispiel durchgeführten Untersuchungen.

Es wird darauf hingewiesen, dass die kombinierte Vorverzerrung/Entzerrung gemäß dem Verfahren nach der Erfindung zwar im Ausführungsbeispiel anhand einer Uplink-MC-CDMA-Übertragung erläutert wird, dass aber dieses Verfahren ebenso bei einer Downlink-MC-CDMA oder verschiedenen ähnlichen Mehrträger-Übertragungskonzepten eingesetzt werden kann.

Die Ergebnisse zeigen, dass sogar bei nicht kanalcodierter MC-CDMA die mit der kombinierten Vorverzerrung/Entzerrung erreichten Verbesserungen erheblich sind. Für MC-CDMA mit Kanalcodierung und weicher "Interference Cancellation" ist davon auszugehen, dass die Verbesserungen der Leistungsfähigkeit größer sind und die Grenzkurven der kombinierten Vorverzerrung/Entzerrung im Einnutzer("Single User")-Fall zumindest angenähert erreicht werden.

Die Grenzen der kombinierten Vorverzerrung/Entzerrung im Einnutzer("Single User")-Fall sind dargestellt worden und es wurde aufgezeigt, dass diese Grenzen eindeutig sowohl unterhalb der "Matched Filter"(MF)-Grenzen als auch unterhalb der "Additive White Gaussian Noise"(AWGN)-Grenzen liegen.

## Patentansprüche

1. Verfahren zur drahtlosen Übertragung digitaler Signale unter Anwendung von Entzerrungsmaßnahmen, welche den aktuellen Einfluss des Übertragungskanals berücksichtigen, **gekennzeichnet durch** die Kombination beliebiger sendeseitig durchgeführter Vorverzerrungsmaßnahmen mit beliebigen empfangsseitig durchgeführten Entzerrungsmaßnahmen.

2. Verfahren nach Anspruch 1, **dadurch gekennzeichnet, dass** die durchgeführten Vorverzerrungs- bzw. Entzerrungsmaßnahmen auf dem an sich bekannten Konzept des "Maximum Ratio Combining" (MRC) oder des "Equal Gain Combining" (EGC) oder des "Zero Forcing"(ZF)-Kriteriums oder des "Minimum Mean Square Error"(MMSE) -Kriteriums oder des "Maximum Likelihood"(ML)-Kriteriums oder der "Interference Cancellation" beruhen.

3. Verfahren nach Anspruch 1, **dadurch gekennzeichnet, dass** bei Anwendung in einem Mehrträgerübertragungsverfahren die sendeseitige Vorverzerrung und die empfangsseitige Entzerrung anhand einer Manipulation der Einzelträger vorgenommen werden.

4. Verfahren nach Anspruch 3, **dadurch gekennzeichnet, dass** eine sendeseitig durchgeführte Vorverzerrungsmaßnahme darin besteht, die vorhandene Signalenergie in geeigneter Weise auf die verschiedenen Träger aufzuteilen.

5. Verfahren nach Anspruch 1, **dadurch gekennzeichnet, dass** bei Anwendung in einem Einträgerübertragungsverfahren die senderseitige Vorverzerrung und die empfangsseitige Entzerrung im Frequenzbereich vorgenommen werden.

6. Verfahren nach Anspruch 1, **dadurch gekennzeichnet, dass** bei Anwendung in einem Vielfachzugriff-System die empfangsseitige Entzerrungsmaßnahme nur vom Empfangssignal des betrachteten Nutzers bei der Detektion abgeleitet wird, also ein sogenanntes "Single User Detection"(SUD)-Verfahren vorgenommen wird.

7. Verfahren nach Anspruch 1, **dadurch gekennzeichnet, dass** bei Anwendung in einem Vielfachzugriff-System die

empfangsseitige Entzerrungsmaßnahme von den Empfangssignalen mehrerer oder aller Nutzer bei der Detektion abgeleitet wird, also ein sogenanntes "Multi User Detection"(MUD)-Verfahren vorgenommen wird.

8. Verfahren nach Anspruch 1, **dadurch gekennzeichnet, dass** bei Anwendung in einem Multiplexsystem die empfangsseitige Entzerrungsmaßnahme von einem einzelnen Informationssymbol bei der Detektion abgeleitet wird.

9. Verfahren nach Anspruch 1, **dadurch gekennzeichnet, dass** bei Anwendung in einem Multiplexsystem die empfangsseitige Entzerrungsmaßnahme von mehreren oder allen im Multiplex übertragenen Informationssymbolen bei der Detektion abgeleitet wird.

10. Verfahren nach Anspruch 1, **gekennzeichnet durch** eine Kombination mit beliebigen Standardverfahren der Nachrichtenübertragung, wie unterschiedlichen Modulationsverfahren, verschiedenen Codierungsverfahren, "Space-Time Coding" und "Multiple-Input Multiple-Output"(MIMO)-Verfahren.

11. Verfahren nach einem der vorhergehenden Ansprüche, **dadurch gekennzeichnet, dass** die Signalübertragung in einem Zeitduplex-System betrieben wird.

12. Verfahren nach Anspruch 11, **dadurch gekennzeichnet, dass** die sendeseitige Vorverzerrung jeweils auf der Grundlage der Ergebnisse einer Kanalschätzung des vorher am Ort des Senders empfangenen Signals eingestellt wird.

13. Verfahren nach einem der Ansprüche 1 bis 10, **dadurch gekennzeichnet, dass** die Signalübertragung in einem Frequenzduplex-System oder Codeduplex-System betrieben wird.

14. Verfahren nach Anspruch 1 und 3, **dadurch gekennzeichnet, dass** das verwendete Mehrträgerübertragungsverfahren das sogenannte MC-CDMA-Verfahren, d.h. das "Multi-Carrier Code-Division Multiple-Access"-Verfahren ist.

15. Verfahren nach einem der vorhergehenden Ansprüche, **dadurch gekennzeichnet, dass** die sendeseitigen Vorverzerrungsmaßnahmen und die empfangsseitigen Entzerrungsmaßnahmen bei der Signalübertragung in einem Funknetz zwischen den Sendern von mobilen, portablen oder festen Sende/Empfangsstationen und einer Basisstation im sogenannten "Uplink"-Betrieb vorgenommen werden.

16. Verfahren nach einem der Ansprüche 1 bis 14, **dadurch gekennzeichnet, dass** die sendeseitigen Vorverzerrungsmaßnahmen und die empfangsseitigen Entzerrungsmaßnahmen bei der Signalübertragung in einem Funknetz zwischen einer Basisstation und den Empfängern von mobilen, portablen oder festen Sende/Empfangsstationen im sogenannten "Downlink"-Betrieb vorgenommen werden.

17. Verfahren nach Anspruch 15 oder 16, **dadurch gekennzeichnet, dass** die Signalübertragung mit dem Zeitduplex-Mehrträger-CDMA-Verfahren vorgenommen wird, also mit "Time Division Duplex Multi-Carrier Code-Division Multiple-Access" (TDD/MC-CDMA).

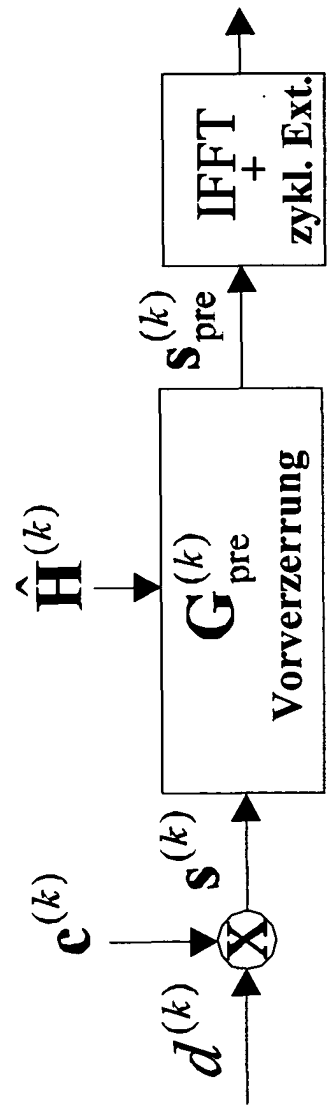

$d^{(k)}$
$\mathbf{c}^{(k)}$
X
$\mathbf{s}^{(k)}$
$\hat{\mathbf{H}}^{(k)}$
$\mathbf{G}_{\text{pre}}^{(k)}$
Vorverzerrung
$\mathbf{s}_{\text{pre}}^{(k)}$
IFFT
+
zykl. Ext.


Fig.1

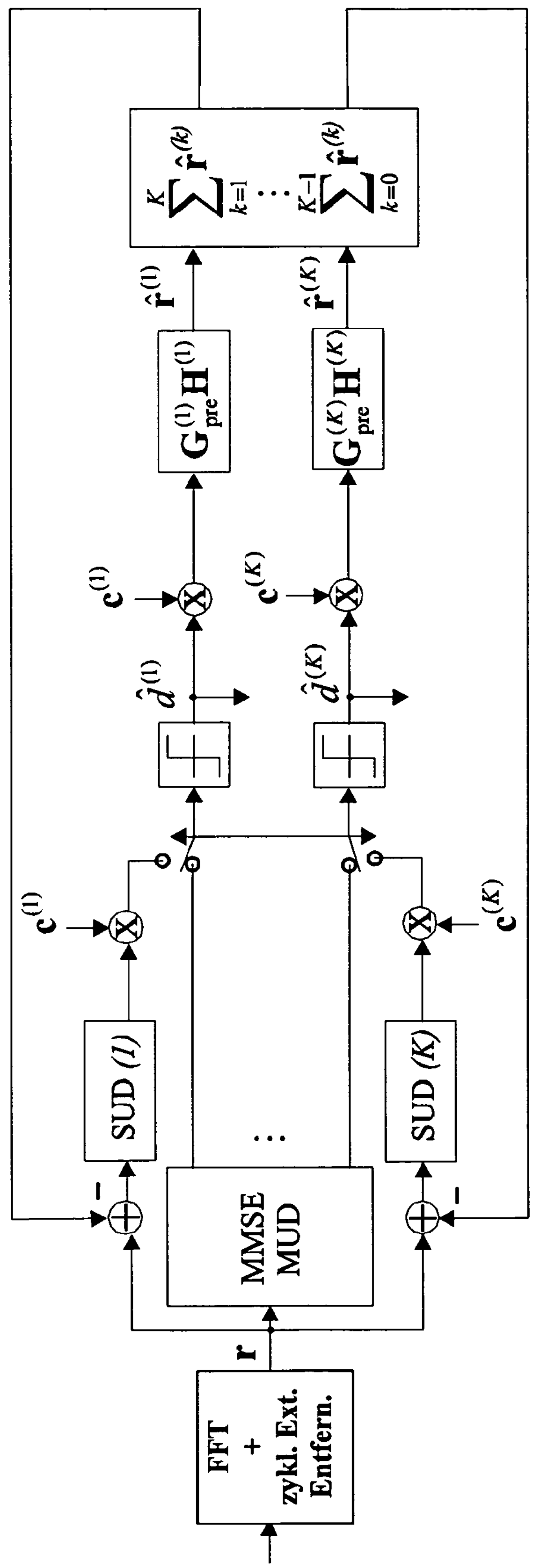


Fig.2

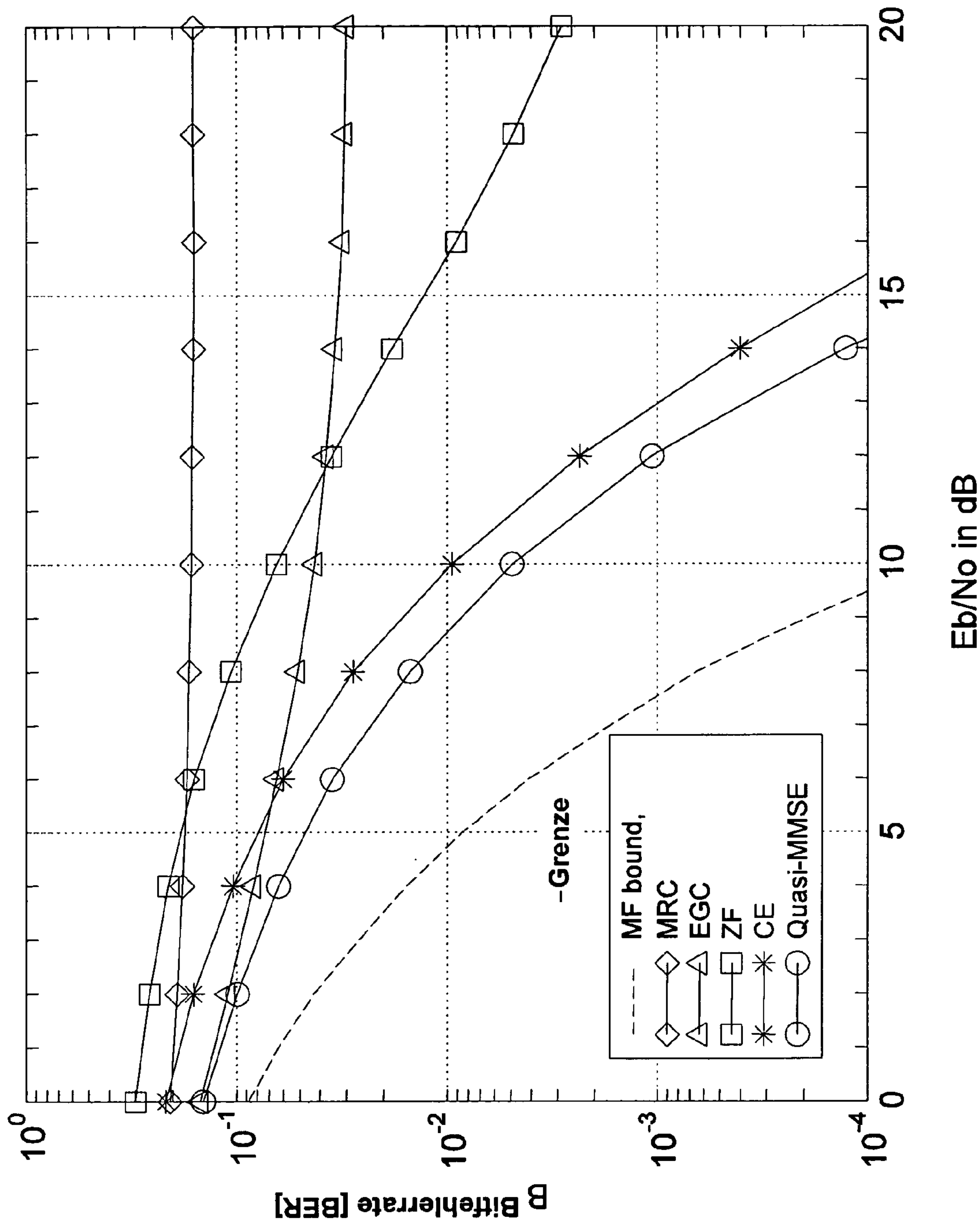

Bitfehlerrate [BER]
$10^0$
$10^{-1}$
$10^{-2}$
$10^{-3}$
$10^{-4}$
0
5
10
15
20
Eb/No in dB
MF bound,
-Grenze
MRC
EGC
ZF
CE
Quasi-MMSE


Fig.3

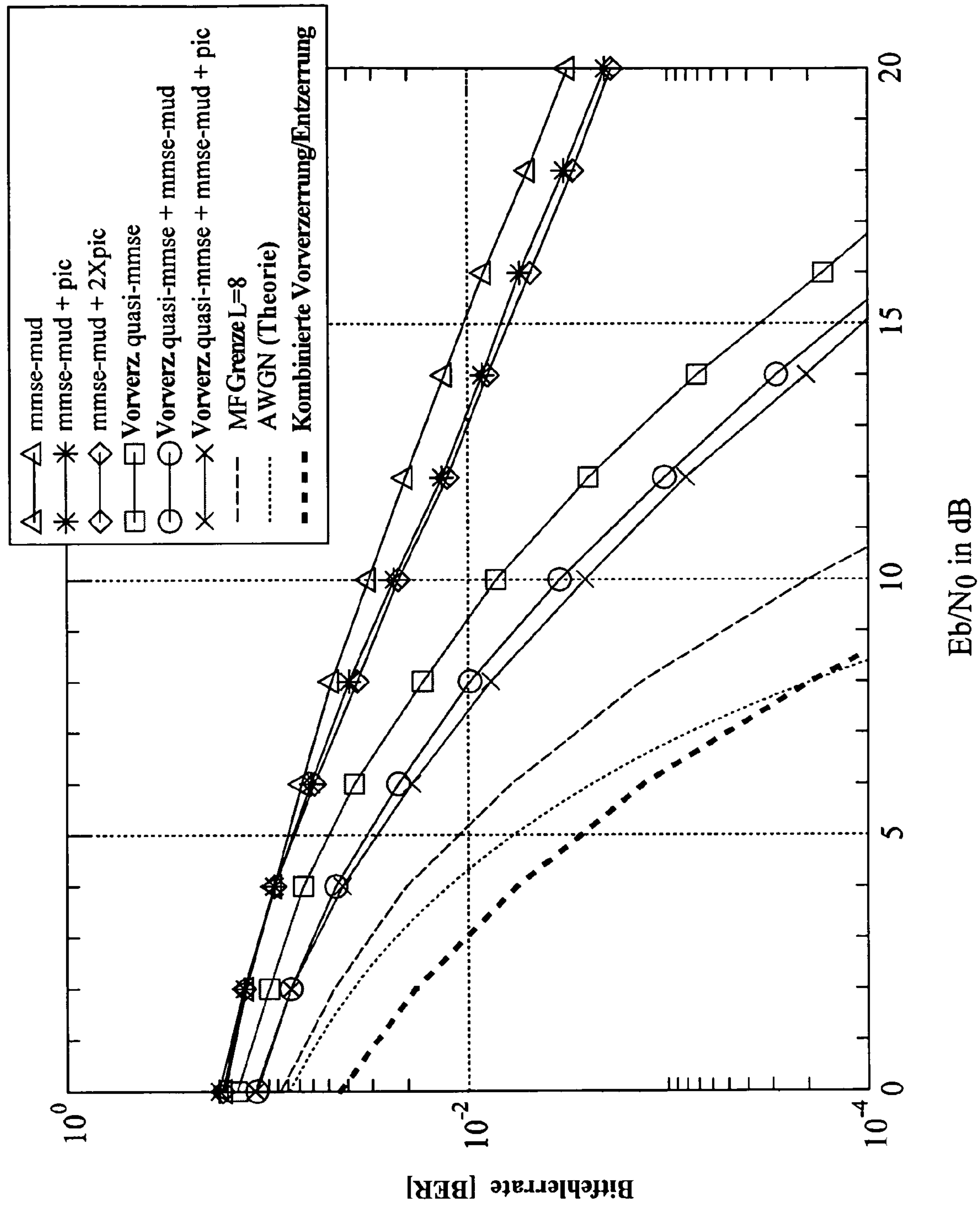
mmse-mud
mmse-mud + pic
mmse-mud + 2Xpic
Vorverz. quasi-mmse
Vorverz. quasi-mmse + mmse-mud
Vorverz. quasi-mmse + mmse-mud + pic
MF Grenze L=8
AWGN (Theorie)
Kombinierte Vorverzerrung/Entzerrung
Bitfehlerrate [BER]
$10^0$
$10^{-2}$
$10^{-4}$
Eb/N0 in dB
0
5
10
15
20

Fig.4

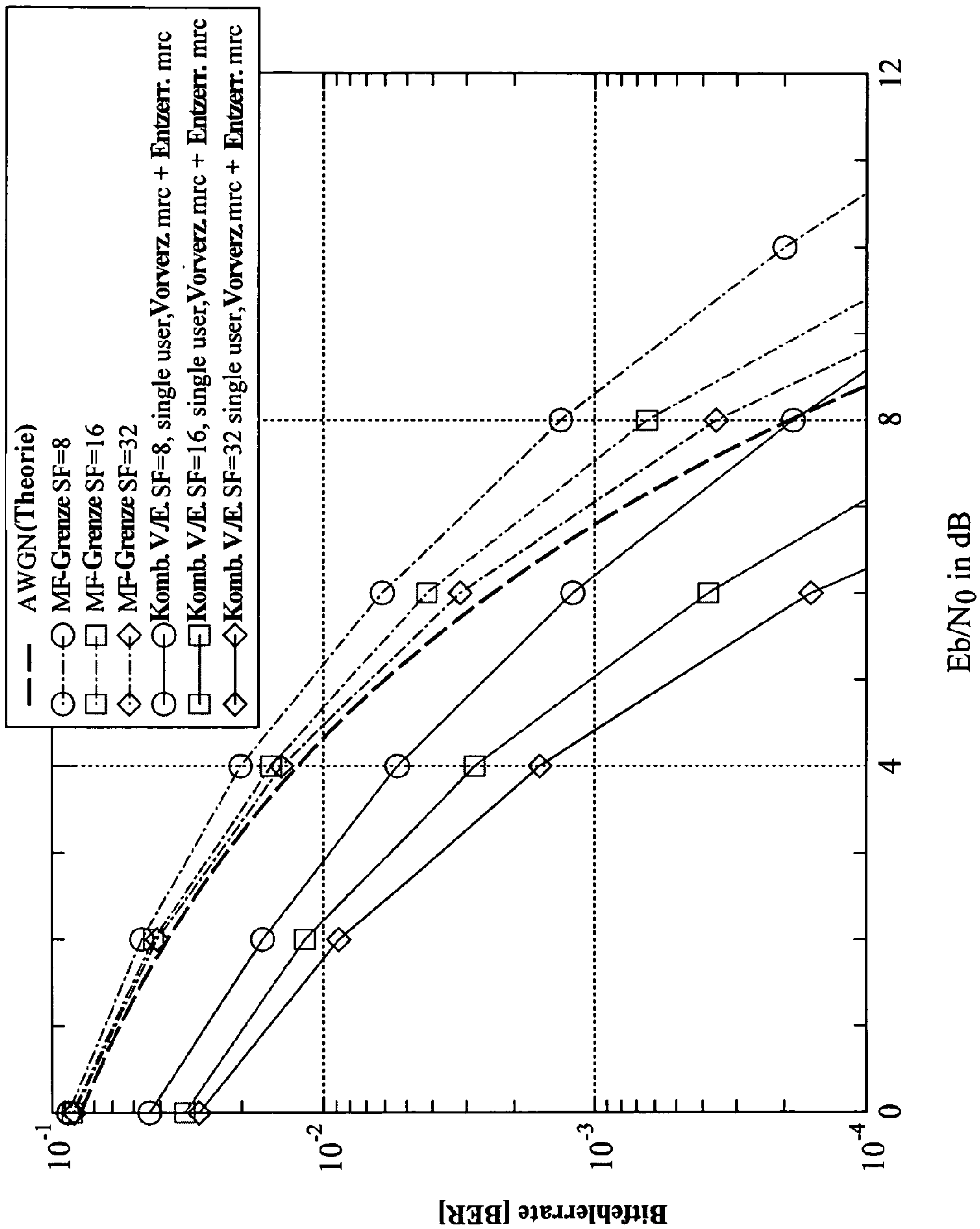
AWGN(Theorie)
MF-Grenze SF=8
MF-Grenze SF=16
MF-Grenze SF=32
Komb. V./E. SF=8, single user,Vorverz. mrc + Entzerr. mrc
Komb. V./E. SF=16, single user,Vorverz. mrc + Entzerr. mrc
Komb. V./E. SF=32 single user,Vorverz. mrc + Entzerr. mrc
Bitfehlerrate [BER]
$10^{-1}$
$10^{-2}$
$10^{-3}$
$10^{-4}$
0
4
8
12
Eb/N0 in dB

Fig.5